(19) **Europäisches Patentamt / European Patent Office / Office européen des brevets**

(11) **EP 1 387 349 B1**

(12) **EUROPEAN PATENT SPECIFICATION**

(45) Date of publication and mention
of the grant of the patent:
**09.05.2007 Bulletin 2007/19**

(51) Int Cl.:
***G10L 15/22*** (2006.01)

(21) Application number: **03254208.6**

(22) Date of filing: **02.07.2003**

(54) **Voice recognition/response system, voice recognition/response program and recording medium for same**

Spracherkennungs- und -antwortsystem, Spracherkennungs- und -antwortprogramm und zugehöriges Aufzeichnungsmedium

Système de reconnaissance/réponse vocale, programme de reconnaissance/réponse vocale et support d'enregistrement

(84) Designated Contracting States:
**DE FR GB**

(30) Priority: **02.07.2002 JP 2002193380**

(43) Date of publication of application:
**04.02.2004 Bulletin 2004/06**

(73) Proprietor: **Pioneer Corporation
Meguro-ku,
Tokyo (JP)**

(72) Inventors:
 • **Kobayashi, Hajime,
 Pioneer Corporation
 Tsurugashima-shi
 Saitama-ken (JP)**
 • **Ichihara, Naohiko,
 Pioneer Corporation
 Tsurugashima-shi
 Saitama-ken (JP)**
 • **Odagawa, Satoshi,
 Pioneer Corporation
 Tsurugashima-shi
 Saitama-ken (JP)**

(74) Representative: **Townsend, Victoria Jayne et al
Fry Heath & Spence LLP,
The Gables,
Massetts Road
Horley,
Surrey RH6 7DQ (GB)**

(56) References cited:
**US-B1- 6 243 675**

 • XAVIER POUTEAU ET AL: "Robust spoken dialogue systems for consumer products: a concrete application" 1998 INTERNATIONAL CONFERENCE ON SPOKEN LANGUAGE PROCESSING - NOV 30 - DEC 4 1998, October 1998 (1998-10), page P368, XP007000255 SYDNEY CONVENTION CENTER, SYDNEY, AUSTRALIA
 • KUHN T ET AL: "Hybrid in-car speech recognition for mobile multimedia applications" VEHICULAR TECHNOLOGY CONFERENCE, 1999 IEEE 49TH HOUSTON, TX, USA 16-20 MAY 1999, PISCATAWAY, NJ, USA,IEEE, US, vol. 3, 16 May 1999 (1999-05-16), pages 2009-2013, XP010342272 ISBN: 0-7803-5565-2

**Description**

BACKGROUND OF THE INVENTION

Field of the Invention

The present invention relates to a voice recognition/response system for providing a voice response to utterance of a user.

Description of the Related Art

There are known a voice recognition/response system and a voice interactive system, which make a voice response to utterance of a user. With respect to such systems, there have been proposed some systems that realize a specific voice response such as dialect. However, almost all of them actively utilize information, which can be obtained from a dialog system, rather than utterance information from the user. Taking a car navigation as an example, the above-mentioned system corresponds to a system, which actively utilizes information on the basis of which a car navigation apparatus functions appropriately, e.g., regional information obtained during the driving of a car, also in the voice response (see Japanese Laid-Open Patent Application No. 2001-227962 and Japanese Laid-Open Patent Application No. H8-124092). The system having such functions bring advantages to a user so as to enable him/her to obtain auditorily regional information on a region in which he/her is driving, thus amusing a driver and/or a passenger(s).

However, there may be given, as an example of problems involved in the above-described voice recognition/response system, a problem that it is difficult to realize voice response with which a user feels familiarity. More specifically, utterance circumstances and utterance contents by a user may change significantly due to a variety of circumstances and/or mental states of the user, with the result that neither any one of the systems applied to electronic equipment such as a car navigation apparatus nor any one of the methods, which have been proposed, including the system disclosed in the above-mentioned publications, may cope fully with a flexible response to the unspecified users.

US 6243675 B1 discloses an information processing system which includes a speech recognition feature. The system includes a memory means for storing speech division specification words, input speech being compared with stored information to determine to which speech division the input speech belongs.

The present invention aims to provide an alternative and superior system to that of US 6243675 B1.

SUMMARY OF THE INVENTION

An object of the present invention, which was made in view of the above-mentioned problems, is therefore to provide a voice recognition/response system, which can realize a voice response with which a user feels familiarity.

In order to attain the aforementioned object there is provided, a voice recognition/response system as set out in claim 1.

In order to attain the aforementioned object, a storage medium of the second aspect of the present invention, on which a voice recognition/response program to be executed by a computer is stored, has the features as set forth in claim 3.

In order to attain the aforementioned object, a voice recognition/response program of the third aspect of the present invention, to be executed by a computer, has the features as set forth in claim 4.

BRIEF DESCRIPTION OF THE DRAWINGS

FIG. 1 is a block diagram illustrating a schematic structure of a voice recognition/response system according to an embodiment of the present invention;
FIG. 2 is a block diagram of the voice recognition/response system according to an example of the present invention;
FIG. 3 is a flowchart of an utterance feature category selection processing;
FIG. 4 is a flowchart of a response voice generation processing;
FIG. 5 is another flowchart of the response voice generation processing;
FIG. 6A is a view illustrating Example No. 1 of contents stored in a reading database of the response database and FIG. 6B is a view illustrating Example No. 2 thereof;
FIG. 7 is a flowchart of the voice recognition/response processing according to the first modification of the present invention;
FIG. 8 is a view illustrating a flow of the processing according to the second modification of the present invention; and

FIG. 9 is a flowchart of the voice recognition/response processing according to the second modification of the present invention.

DETAILED DESCRIPTION OF THE PREFERRED EMBODIMENTS

Now, preferred embodiments of the present invention will be described in detail below with reference to the accompanying drawings.

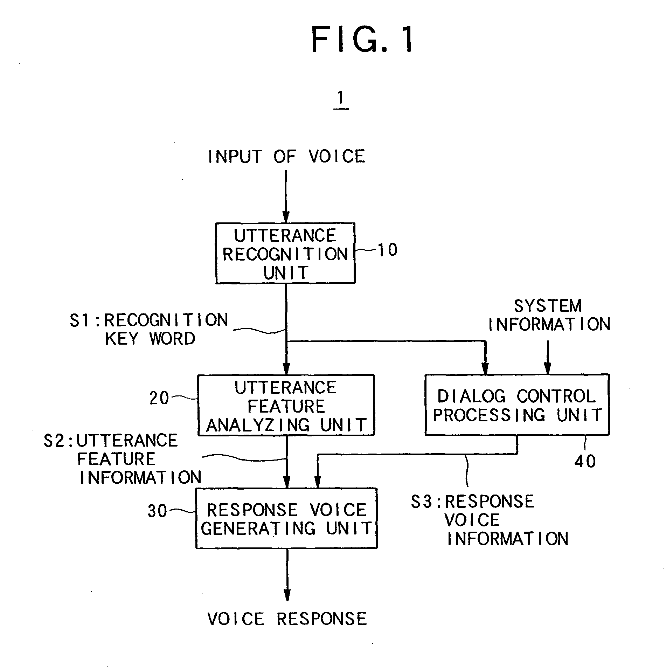

FIG. 1 illustrates a schematic structure of a voice recognition/response system according to the embodiment of the present invention. The voice recognition/response system 1 according to the embodiment of the present invention, which outputs a voice response to a voice input caused by utterance of a user to realizes a voice dialog with the user, may be applied to an apparatus or equipment having various functions of voice response, such as a car navigation system, home electric appliances and audio-video equipment. Producing a voice recognition/response program to realize the voice recognition/response system of the embodiment of the present invention and installing the above-mentioned program in a terminal device through a recording medium or a communication device to execute it, enable the terminal device to function as the voice recognition/response system. In this case, the above-mentioned terminal device may include various information terminals such as a car navigation system, home electric appliances and audio-video equipment.

The voice recognition/response system 1 is classified broadly into structural components of an utterance recognition unit 10, an utterance feature analyzing unit 20, a response voice generating unit 30 and a dialog control processing unit 40. The utterance recognition unit 10 receives a voice input caused by a user's utterance, executes the voice recognition processing and other processing to recognize the contents of the utterance and outputs a recognition key word S1 as the recognition results. The recognition key word S1 is obtained as the recognition results when recognizing every words of the user's utterance. The recognition key word S1 outputted from the utterance recognition unit 10 is sent to the utterance feature analyzing unit 20 and the dialog control processing unit 40.

The utterance feature analyzing unit 20 analyzes the utterance feature of a user on the basis of the recognition key word. The utterance feature includes various features such as regionality of the user, the current environment of the user and the like, which may have influence on the user's utterance. The utterance feature analyzing unit 20 analyzes the utterance feature on the basis of the recognition key word S1, generates an utterance feature information S2 and send it to the response voice generating unit 30.

The dialog control processing unit 40 controls progress of dialog with the user on the basis of the recognition key word S1. The progress of dialog is determined in consideration of, for example, system information of equipment to which the voice recognition/response system of the present invention is applied, so as to be controlled in accordance with a dialog scenario, which has previously been prepared. The dialog control processing unit 40 determines the dialog scenario, which is to progress based on the system information and other information on the current environment, and enables the dialog scenario to progress on the basis of the recognition key word S 1 corresponding to the contents of the user's utterance, to perform the dialog. Then, the dialog control processing unit 40 generates, in accordance with the progress of dialog, a response voice information S3 by which a voice response to be outputted subsequently is determined, and sends the thus generated response voice information S3 to the response voice generating unit 30.

The response voice generating unit 30 generates a voice response having a pattern, which corresponds to the response voice information S3 given from the dialog control processing unit 40 and to the utterance feature represented by the utterance feature information S2, and outputs a voice response through a voice output device such as a loudspeaker.

The voice recognition/response system 1 of the embodiment of the present invention outputs the voice response based on the utterance feature according to the utterance condition of the user in this manner.

EXAMPLES

Now, preferred examples will be described below.

[System Structure]

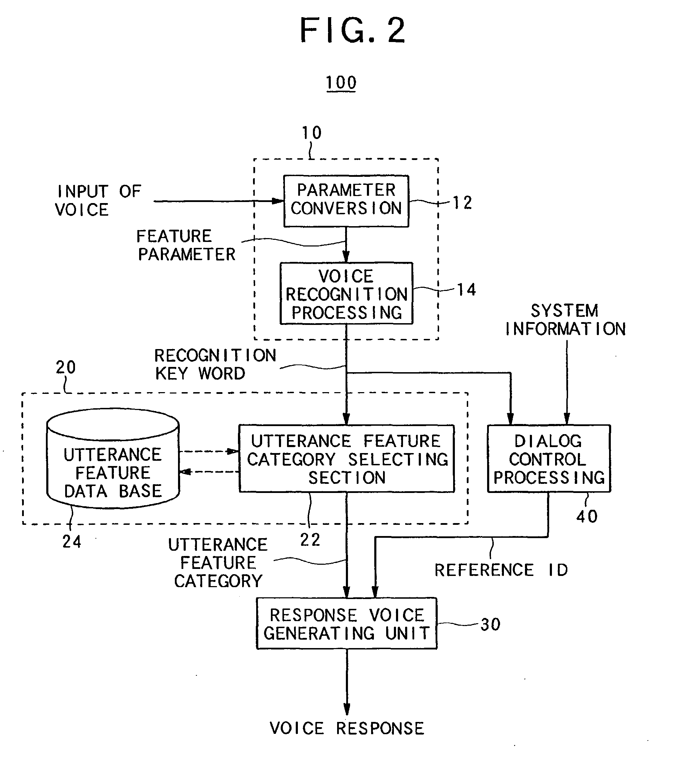

FIG. 2 is a block diagram of the voice recognition/response system 100 according to the example of the present invention, which realizes the suitable voice response to the user's utterance. As shown in FIG. 2, the voice recognition/response system 100 is classified broadly into structural components of the utterance recognition unit 10, the utterance feature analyzing unit 20, the response voice generating unit 30 and the dialog control processing unit 40.

The utterance recognition unit 10 includes a parameter conversion section 12 and a voice recognition processing section 14. The parameter conversion section 12 converts the voice, which has been inputted by the user through his/her utterance, into feature parameters, which are indicative of features of the voice. The voice recognition processing section 14 conducts a matching processing between the feature parameters obtained by the parameter conversion section 12 and key word models, which have previously been included in a voice recognition engine, to extract a recognition key word. In the example of the present invention, the voice recognition processing section 14 is configured to conduct the matching processing with the key word in each of the words to execute the recognition processing. The recognition key word is a word included in the user's utterance and a key word, which has been recognized through the voice recognition processing.

The utterance feature analyzing unit 20 includes an utterance feature category selecting section 22 and an utterance feature database (DB) 24. The utterance feature category selecting section 22 utilizes the utterance feature parameter, which corresponds to the recognition key word extracted by the voice recognition processing section 14, to select the utterance feature category.

The utterance feature parameter includes a value, which is indicative of occurrence frequency concerning the features that are classified into various elements. In case where it is to be judged if the user giving utterance is a person born in Kanto region in Japan (hereinafter referred to as the "Kanto person") or a person born in Kansai region in Japan (hereinafter referred to as the "Kansai person"), for example, the utterance feature parameter is stored in the utterance feature database 24 in the form of the following multidimensional value:

p = (value of utterance frequency in the Kanto person, value of utterance frequency in the Kansai person)

The utterance feature category selecting section 22 utilizes the above-described utterance feature parameter to select the user's utterance feature category.

The dialog control processing unit 40 controls the dialog with the user. The dialog control processing unit 40 determines the contents to be outputted as the voice response, utilizing the information of the system and the recognition key word, and supplies a reference ID, which serves as recognition information of the contents to be outputted as the voice response, to the response voice generating unit 30. Incidentally, the dialog control processing is executed for example by causing the previously prepared dialog scenario to progress in consideration of the contents of the user's utterance. The dialog control processing itself is remotely related to the features of the present invention, description thereof further in detail is therefore be omitted.

The response voice generating unit 30 generates voice signals for voice response on the basis of the utterance feature category, which has been obtained by the utterance feature category selecting section 22, and the reference ID for the voice response, which has been obtained by the dialog control processing unit 40. The voice generated by the response voice generating unit 30 is then outputted through the loudspeaker to the user in the form of voice response.

[Utterance Feature Parameter]

Now, the utterance feature parameter will be described in detail below. The utterance feature parameter is a parameter, which is previously prepared in order to select a certain utterance feature category under which the user's utterance falls, from the plurality of utterance feature categories, which have previously been obtained by classifying the features of the user's utterance into various kinds of patterns. The utterance feature parameter is expressed in the form of multidimensional value, which includes the corresponding number of elements to the utterance feature categories. Each of the above-mentioned elements includes a value, which is indicative of frequency with which a person falling under the utterance category that is expressed by the element in question uses the key word.

Now, an example of procedure to obtain the utterance feature parameter will be described below.

[Step 1]

There is conducted a survey in the form of a questionnaire on if respective users ordinarily use the key word included in a dictionary as the recognition key word on a scale of "0" (zero) to "n" (the users are requested to select any one of choices from "O" to "n" on the assumption that a larger number of them means a higher frequency of use), in order to obtain samples.

There are given the following equations:

$$M = (m(1), m(2), \quad , m(N))$$

(wherein, I = 1, 2, , N)

$$M\_all = \sum m\,(i)$$

wherein, "N" being the number of recognition categories and "m(i)" being the number of persons subjected to the questionnaire survey with respect to the category "i".

[Step 2]

The results of the questionnaire survey are compiled.

There is the assumption that the value of the results as compiled concerning the key word No. "k" is expressed by the following equation:

$$Rk = (rk(1),\ rk(2),\qquad,\ rk(N))$$

wherein, rk(i) being the compiled result concerning the category "i".
The element value "rk(i)" of "Rk" is calculated on the basis of the following equation:

$$rk(i) = \sum dk(i,\ j)$$

(wherein, j = 1, 2, , N; dk(i, j) = 0,. 1, , p 1)

The above-mentioned "dk(i, j)" is indicative of the results from a respondent No. "j", i.e., the frequency with which a person falling under the speaker category "i" uses the key word No. "k".

[Step 3]

A normalized parameter "L=(1(1), , 1(N)) is determined for normalization of a group. The normalized parameter in the category "i" is determined so as to satisfy the following equation:

$$M\_all \ /\ p = l(i) * m(i)$$

(wherein, I = 1, 2, , N)

The above-identified equation may be transformed into the following equation:

$$l(i) = M\_all \ /\ (\ p * m(i)\ )$$

[Step 4]

The value of the compiled result "Rn" is normalized utilizing the normalized parameter, which has been determined by Step 3, as follows:

$$rk'(i) = l(i) * rk(i) \ /\ \sum l(j) * rk(j)$$

[Step 5]

The thus normalized values of the compiled results are stored in the utterance feature database so that the value "rk'(i)" is used as the utterance feature parameter for the key word "k".

<Calculation Example>

☐ Envisaged System:

There is prepared the voice dialog system in which regionality is extracted from the user's utterance and a voice response in dialect, which is suitable for the user's utterance.

☐ Prerequisites:

A: The dialects in Japan are classified into only two patterns in Kanto region and Kansai region.
B: The elements in the utterance feature parameter are listed in the order of Kanto region and Kansai region from one-dimensional one.
C: The utterance feature parameter concerning the key word "*makudo*" (Note: This word in Japanese language, which is to be spoken with the Kansai accent, means, "Mackers") is to be sought out.

[Step 1]

For persons falling under any one of Kanto person and Kansai person, there is conducted a survey in the form of a questionnaire on if they ordinarily use the recognition key word *"makudo".*
Response to any one of the questionnaires can be made in the affirmative or negative. The number "M" of persons who made the response to the questionnaires is expressed by the following equation:

$$M = (731, \quad 635)$$

Accordingly, the following equation is obtained:

$$M\_all = 731 + 635 = 1366$$

[Step 2]

There is obtained the compiled result "R" for the results of the questionnaire survey conducted in Step 1.
The response is made on a 1 to 2 scale of the affirmative and negative, thus providing the term "p=2".
Assuming that the number of persons making the affirmative response is a value of "R", the following equation is provided:

$$R_{makudo} = (9,613)$$

[Step 3]

The normalized parameter "L" is obtained.
The number "M" of persons making response to the questionnaire survey is expressed by the following equation in Step 1:

$$M = (731, \quad 635)$$

Accordingly, the following equations are provided:

6

$$l(1) = M\_all \ / \ ( \ p * m(1) \ )$$

$$= 1366 \ / \ (2 * 731) = 0.93$$

$$l(2) = M\_all \ / \ ( \ p * m(2) \ )$$

$$= 1366 \ / \ (2 * 635) = 1.08$$

$$\therefore \quad L = (0.93, \quad 1.08)$$

The value of the compiled result "$R_{makudo}$" is normalized utilizing the normalized parameter "L" obtained by Step 3, as follows:

$$R\_all_{makudo} = \Sigma r_{makudo} \ (i) * l(i)$$

$$= 9 * 0.93 + 613 * 1.08$$

$$= 670.41$$

$$r'_{makudo} \ (1) = r_{makudo} \ (1) * l(1) \ / \ R'\_all$$

$$= 9 * 0.93 \ / \ 670.41 = 0.012$$

$$r'_{makudo} \ (2) = r_{makudo} \ (2) * l(2) \ / \ R'\_all$$

$$= 613 * 1.08 \ / \ 670.41 = 0.988$$

$$\therefore \quad R'_{makudo} = (0.012, \quad 0.988)$$

The thus normalized value of the compiled result "$R'_{makudo}$" as obtained by Step 4 is stored as the utterance feature parameter of "makudo" in the utterance feature database.

[Utterance Feature Category Selecting Section]

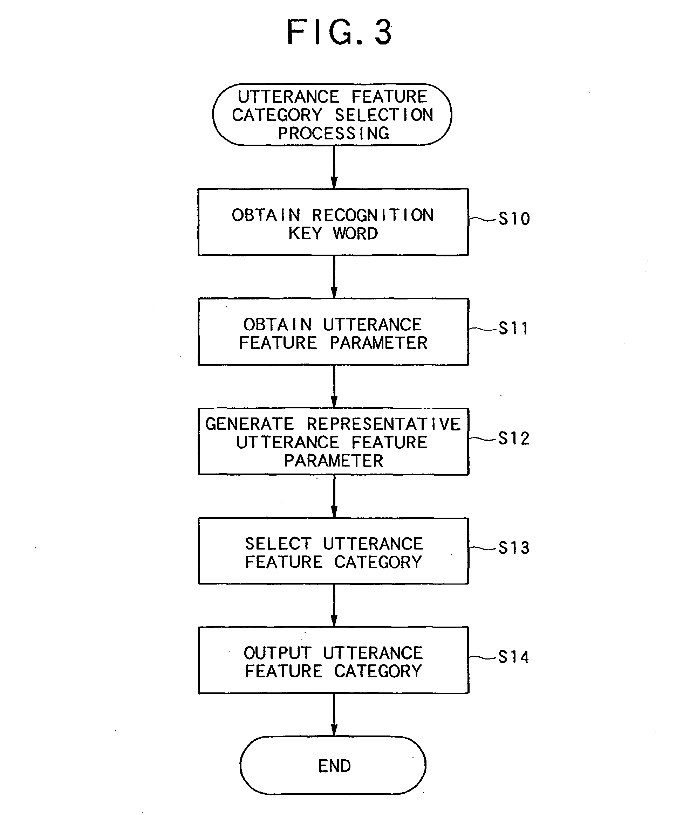

FIG. 3 shows the flowchart of the utterance feature category selection processing. The utterance feature category selection processing is executed by the utterance feature category selecting section 22 as shown in FIG. 2.

The utterance feature category selecting section 22 receives the recognition key word from the voice recognition processing section 14 (Step S10). Then, the utterance feature category selecting section 22 obtains the utterance feature parameter, which corresponds to the recognition key word as inputted, from the utterance feature database 24 (Step S11). In case of existence of a plurality of recognition key words, the respective recognition key words are obtained from the database.

Then, the utterance feature category selecting section 22 obtains the single representative utterance feature parameter from the utterance feature parameters obtained by Step S11 (Step S12). More specifically, existence of a single recognition key word leads to existence of a single utterance feature parameter. In case where the single recognition key word merely exists, the single utterance feature parameter is treated as the representative utterance feature parameter. In case where a plurality of recognition key words exist, a single representative utterance feature parameter is generated utilizing the utterance feature parameters corresponding to the plurality of recognition key words.

Then, the utterance feature category selecting section 22 selects the feature category, utilizing the representative utterance feature parameter obtained by Step S12 (Step S13). The feature category selected by Step S13 is outputted as the utterance feature category for the user.

The utterance feature category selecting section 22 outputs the utterance feature category selected by Step S13 to the response voice generating unit 30 (Step S14). Thus, the utterance feature category selecting processing is completed.

Now, examples of the utterance feature category selecting processing will be described below.

<Example No. 1> : In case where "makudo" (Note: This word in Japanese language, which is to be spoken with the Kansai accent, means, "Mackers") and "want to go" are extracted as the recognition key words.

Prerequisites:

☐ Utterance feature parameter of the word "makudo": (0.012, 0.988)
☐ Utterance feature parameter of the words "want to go": (0.500, 0.500)

In Example No. 1, the elements in the utterance feature parameter represent as follows:
(value of utterance frequency in the Kanto person, value of utterance frequency in the Kansai person)

First, in Step S11, the utterance feature parameter "u" for the word "makudo" and the utterance feature parameter "v" for the words "want to go" are obtained from the utterance feature database. Here, the utterance feature parameters "u" and "v" are expressed as follows:

$$u = (0.012, 0.988), v = (0.500, 0.500)$$

Then, in Step S12, the representative utterance feature parameter is obtained. There are many ways to obtain the representative utterance feature parameter. In this case, there is adopted a way that, of the elements of the utterance feature parameter, which have been obtained by Step S11, the element having the largest value is determined as the element of the representative utterance feature parameter.

The first element of the utterance feature parameter "u" is "0.012" and the first element of the utterance feature parameter "v" is "0.500". Of these values, the largest value is "0.500". In the same way, the second element of the utterance feature parameter "u" is "0.988" and the second element of the utterance feature parameter "v" is "0.500". Of these values, the largest value is "0.988".

According such procedure, the representative utterance feature parameter "w" is expressed as follows:

$$w = (0.500, 0.988)$$

Then, in Step S13, the utterance feature category is selected. Of the elements of the representative utterance feature parameter "w", the element having the largest value is determined as the utterance feature category.

In this example, the element having the largest value in the representative utterance feature parameter "w" is "0.988" in the first element, with the result that the "Kansai person" is selected as the utterance feature category.

<Example No. 2> : In case where "delightful" is extracted as the recognition key word.

Prerequisites:

☐ Utterance feature parameter of the word "delightful": (0.998, 0.002)

In Example No. 2, the elements of the utterance feature parameter represent the following features, respectively:

(delightfulness, irritancy)

First, in Step S11, the utterance feature parameter "u" for the word "delightful" is obtained from the utterance feature database. Here, the utterance feature parameter "u" is expressed as follows:

$$u = (0.998, 0.002)$$

Then, in Step S12, the representative utterance feature parameter is obtained. There are many ways to obtain the representative utterance feature parameter. In this case, there is adopted a way that, of the elements of the utterance feature parameter, which have been obtained by Step S11, the element having the largest value is determined as the element of the representative utterance feature parameter.

In Example No. 2, there exists the single utterance feature parameter to be processed, with the result that the utterance feature parameter "u" itself becomes the representative utterance feature parameter "w", which is expressed as follows:

w = (0.998, 0.002)

Then, in Step S13, the utterance feature category is selected. Of the elements of the representative utterance feature parameter "w", the element having the largest value is determined as the utterance feature category.

In this example, the element having the largest value in the representative utterance feature parameter "w" is "0.998" in the first element, with the result that the "delightful" is selected as the utterance feature category. The utterance feature category is selected in this manner.

[Response Voice Generating Unit]

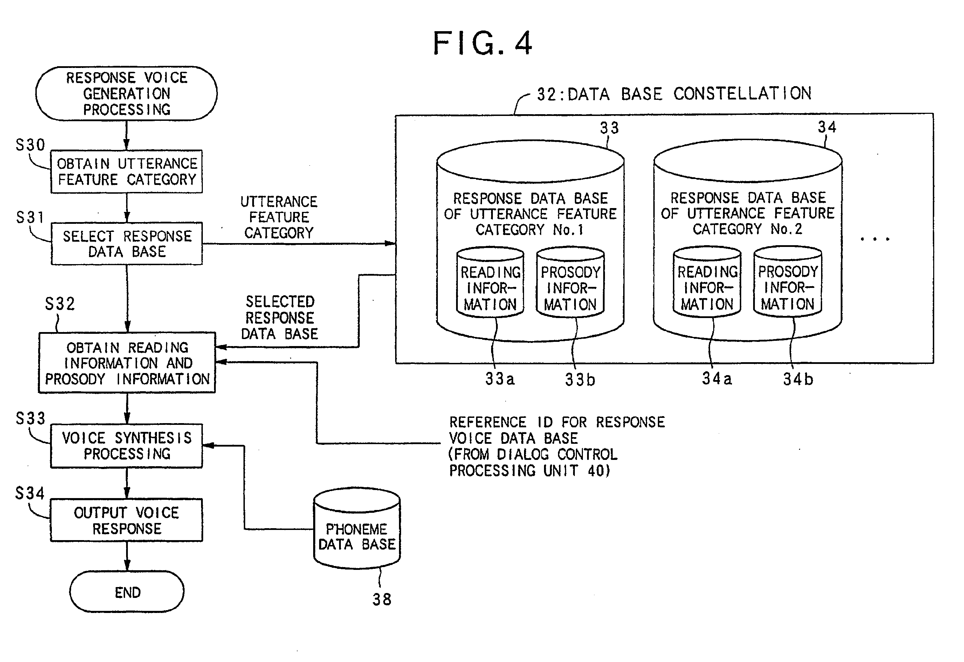

Now, the response voice generating unit is described in detail below. FIG. 4 is a view on the basis of which the response voice generation processing utilizing the utterance feature category will be described, illustrating the flowchart executed by the response voice generating unit in conjunction with the database to which an access is made during the execution of the flowchart.

As shown in FIG. 4, the response voice generating unit 30 includes a response database constellation 32 and a phoneme database 38. The response database constellation 32 includes a plurality of response databases 33, 34, , which are constructed for the respective utterance feature categories. The respective response databases 33, 34, include reading information databases 33a, 34a, and prosody information databases 33b, 34b, .

In the flowchart as shown in FIG. 4, the response voice generating unit 30 obtains the utterance feature category from the utterance feature category selecting section 22 (Step S30) and selects a set of response databases corresponding to the above-mentioned utterance feature category (Step S31). The response database stores the reading information database and the prosody information database for generating prosody, such as words, a separation for a phrase and a position of accent, in pairs. In case where the utterance feature category as inputted is for example the "Kansai person", the response database for the Kansai person is selected. Alternatively, in case where the utterance feature category as inputted is for example the "Kanto person", the response database for the Kanto person is selected.

Then, the response voice generating unit 30 utilizes the reference ID as inputted from the dialog control processing unit 40 to obtain the reading information for voice response and the corresponding prosody information from the response database as selected by Step S31 (Step S32).

The response voice generating unit 30 generates a synthesized voice for the voice response, utilizing the reading information and the prosody information as obtained by Step S32, as well as the phoneme database storing phoneme data for constituting the synthesized voice (Step S33), and outputs the thus generated synthesized voice in the form of voice response (Step S34). The response voice is generated and outputted in this manner.

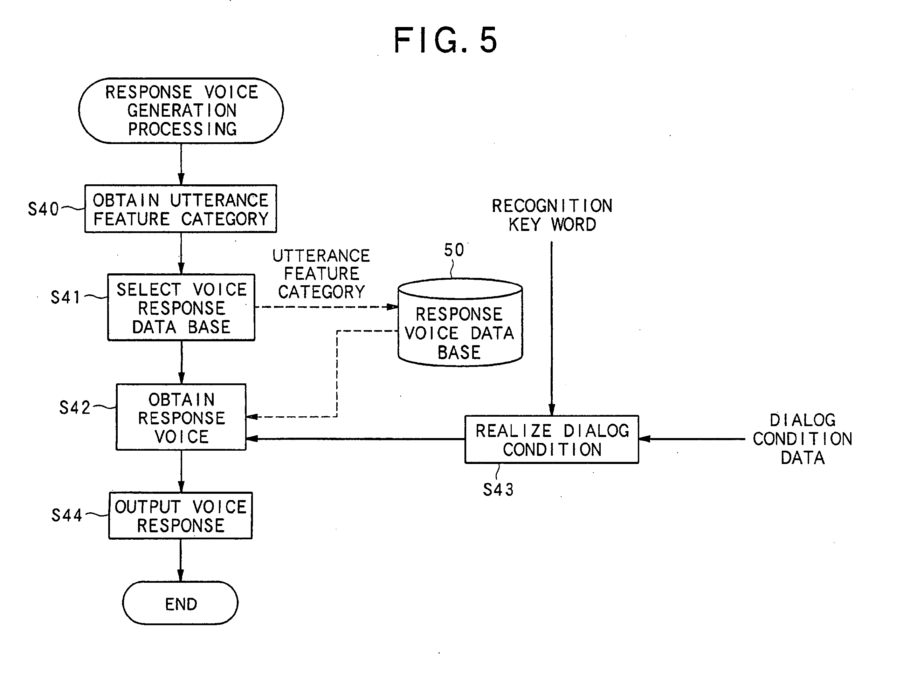

The processing as shown in FIG. 4 has a flow in which the response voice is generated utilizing the voice synthesizing method according to the speech synthesis by rule. Another voice synthesizing method may be applied. In case where there is prepared for example voice, which has been previously recorded for the voice response, the reading information database as shown in FIG. 4 is substituted by a response voice database 50, which is constituted by the above-mentioned recorded voice, as shown in FIG. 5. More specifically, the response voice generating unit receives the utterance feature category from the utterance feature category selecting section 22 (Step S40), selects the response voice database 50 (Step S41) and obtains the response voice (Step S42). The dialog control processing unit 40 and the other devices realize the dialog condition (Step S44) and the response voice generating unit outputs directly the response voice, which has been selected based on the dialog condition and the recognition key word (Step S44).

Now, an example of the response voice generation processing will be described below. This example is based on the processing as shown in FIG. 4.

<Example No. 1> : In case where the utterance feature category is judges as "Kansai" and the value of "2" is inputted as the reference ID of the response voice database.

First, the response voice generating unit 30 makes a selection of the response database in Step S31. "Kansai" is inputted as the utterance feature category. Accordingly, the response database is set for the use of "Kansai" in this block.

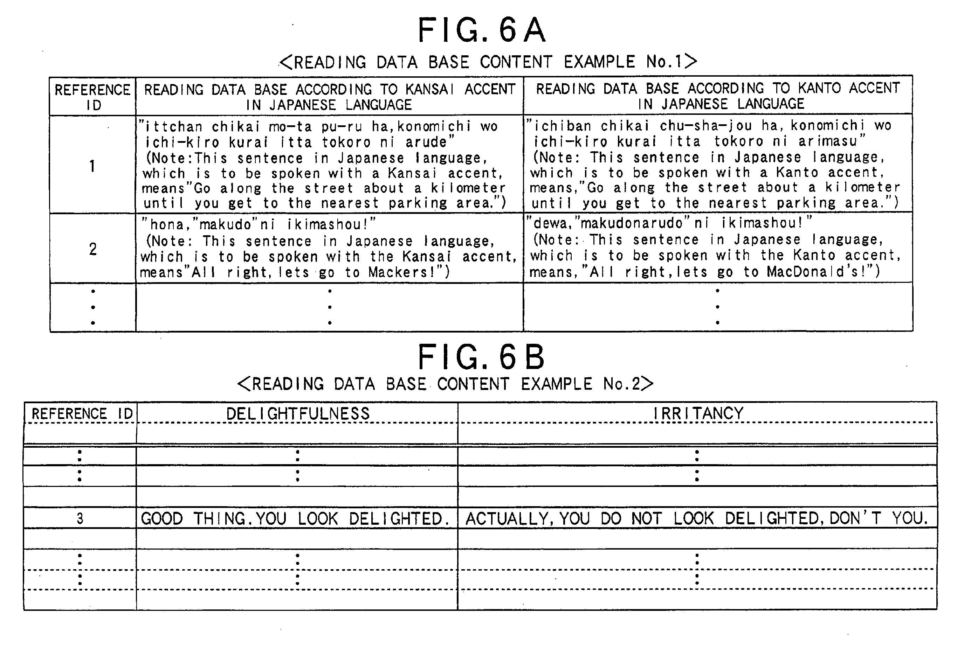

Then, the response voice generating unit 30 receives the reference ID of the response voice database in Step S32, and obtains the prosody information corresponding to the above-mentioned ID and the reading information from the response database as selected in Step S31. The response database stores the reading information as exemplified in FIG. 6A. In this example, the reference ID is "2" and the response database for "Kansai" is selected in Step S31, with the result that the sentence "*hona*, "*makudo*" *ni ikimashou!*" (Note: This sentence in Japanese language, which is to be spoken with the Kansai accent, means, "All right, lets go to Mackers!") is selected. At the same time, there is obtained the prosody information such as a word, a separation for a phrase, a position of punctuation and a position of accent, which corresponds to the reading information.

Then, the response voice generating unit 30 utilizes the reading data of *"hona, "makudo" ni ikimashou!"* as outputted in Step S32, the prosody information corresponding to the above-mentioned reading data, and the phoneme database, to generate voice for response in Step 33. The voice generated in Step S33 is outputted in the form of voice response.

In this example, the response database stores the data for every single sentence, thus leading to the single reference ID obtained in Step S32. The present invention may however be applied also to a case where the response database stores the data for every single word, to realize the system of the present invention. In such a case, a sequence of reference IDs is outputted from the dialog control processing unit 40. The reading information corresponding to the respective reference ID and the prosody information are obtained in the order of the sequence of reference IDs, words are combined together through the voice synthesizing processing in Step S33 and then the voice response is outputted when the combined words constitute a single sentence. There may be applied, as the response database, an intermediate language (in which the prosody information such as an accent is added in the form of symbols to the reading information) database in which the prosody information database and the reading information database are combined together.

<Example No. 2> : In case where the utterance feature category is judged to be "delightfulness", and the value of "3" is inputted as the reference ID of the response voice database.

First, the response voice generating unit 30 makes a selection of the response database in Step S31. "delightfulness" is inputted as the utterance feature category. Accordingly, the response database is set for 'delightfulness" in this block.

Then, the response voice generating unit 30 receives the reference ID of the response voice database in Step S32, and obtains the prosody information corresponding to the above-mentioned ID and the reading information from the response database as selected in Step S31. The response database stores the reading information as exemplified in FIG. 6B. In this example, the reference ID is "3" and the response database for "delightfulness" is selected in Step S31, with the result that the sentence *"Good thing. You look delighted*." is selected. At the same time, there is obtained the prosody information such as a word, a separation for a phrase, a position of punctuation and a position of accent, which corresponds to the reading information.

Then, the response voice generating unit 30 utilizes the reading data of "*Good thing. You look delighted."* as outputted in Step S32, the prosody information corresponding to the above-mentioned reading data, and the phoneme database, to generate voice for response in Step 33. The voice generated in Step S33 is outputted in the form of voice response.

In this example, the response database stores the data for every single sentence, thus leading to the single reference ID obtained in Step S32. The present invention may however be applied also to a case where the response database stores the data for every single word, to realize the system of the present invention. In such a case, a sequence of reference IDs is outputted from the dialog control processing unit 40. The reading information corresponding to the respective reference ID and the prosody information are obtained in the order of the sequence of reference IDs, words are combined together through the voice synthesizing processing in Step S33 and then the voice response is outputted when the combined words constitute a single sentence. There may be applied, as the response database, an intermediate language (in which the prosody information such as an accent is added in the form of symbols to the reading information) database in which the prosody information database and the reading information database are combined together.

<Modification No. 1>

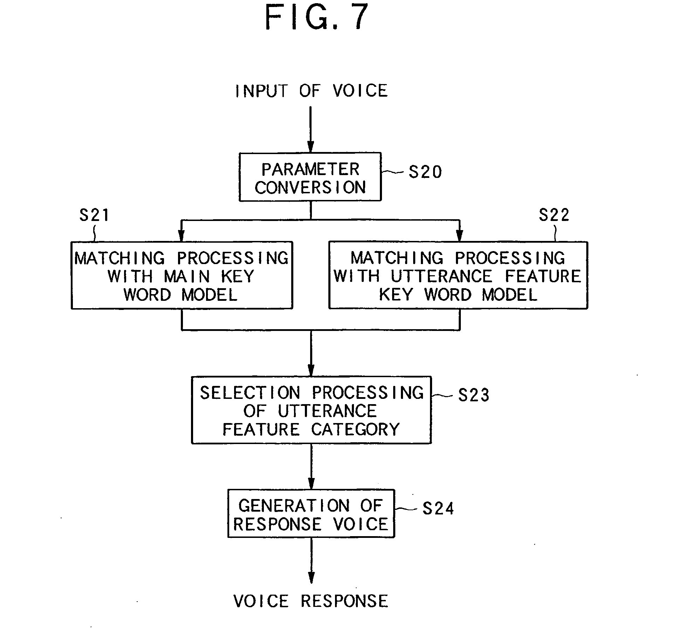

Now, a modification of the above-described example will be described below. In this modification, an interval of voice (i.e., dispensable word) other than the key word interval is also subjected to the judging processing of the utterance feature category. More specifically, there may be carry out a processing of extracting a key word from which the utterance feature may be derived in expression (hereinafter referred to as the "feature key word"), from the utterance data of the dispensable words, in parallel with the key word extracting processing (hereinafter referred to as the "main key word extraction"), as shown in the flowchart in FIG. 7, thus making it possible to reflect more remarkably the features of the user's utterance.

More specifically, the following processing is carried out.

First, the parameter conversion section 12 converts the utterance data, which have been inputted, into the feature parameter (Step S20). Then, the voice recognition processing section 14 conducts a matching processing of the feature parameter generated in Step S20 with the main key word model to extract the key word (Step S21). The voice recognition processing section 14 also conducts the matching processing of the feature parameter generated in Step S20 with the feature key word model to extract the key word for the feature (Step S22).

Then, the utterance feature category selecting section 22 utilizes the utterance feature parameters, which correspond to the main key word obtained by Step S21 and the feature key word obtained by Step S22, to obtain the most suitable utterance feature category (Step S23). At this stage, all of the utterance feature parameters stored on the side of the main key words and the utterance feature parameters stored on the side of the feature key words are utilized to obtain the representative utterance feature parameter.

The response voice generating unit 30 generates voice for voice response, utilizing the utterance feature category obtained by Step S23 and the recognition key words obtained by Steps S21 and S22 (Step S24). The thus generated voice is inputted to the user in the form of voice response.

Now, a concrete processing example in the modification No. 1 will be described below.

<Example>: In case where utterance of *"juutai-jouhou wo tanomu-wa"* (Note: This is to be spoken with the Kansai accent and means "Please give me a traffic jam information") is given.

Prerequisites:

☐ The main key word is *"juutai-jouhou"* (i.e., traffic jam iriformation).
☐ The word "*tanomu-wa*" (i.e., "please give me") has been recorded as the utterance feature key word.
☐ Utterance feature parameter of the word *"juutai-jouhou"*(i.e., traffic jam information): (0.50, 0.50)
☐ Utterance feature parameter of the word *"tanomu-wa"* (i.e., "please give me"): (0.80, 0.20)

\* The elements of the utterance feature parameter in this example represent the following features, respectively:

(value of utterance frequency in the Kansai person, value of utterance frequency in the Kanto person)

The parameter conversion section 12 obtains the feature parameter of the utterance data itself in Step S20.

Then, the voice recognition processing section 14 conducts a matching processing of the main key word model with the feature parameter obtained by Step S20 to extract the main key word of *"juutai-jouhou"*(i.e*.,* traffic jam information) in Step S21. The voice recognition processing section 14 also conducts the matching processing of the feature key word with the feature key word model and the feature parameter obtained by Step S20 to extract the feature key word of "tanomu" (i.e., "Please give me") in Step S22.

Then, the utterance feature category selecting section 22 extracts the utterance feature category in Step S23. More specifically, the utterance feature parameter "u" corresponding to the main key word of "*juutai-jouhou*"(i.e., traffic jam information) is obtained from the utterance feature database. The utterance feature parameter "v" corresponding to the feature key word of "tanomu" (i.e., "Please give me") is also obtained from the utterance feature database. In this example, the utterance feature parameters "u" and "v" are expressed as follows:

u = (0.50, 0.50), v = (0.80, 0.20)

Then, the utterance feature category selecting section 22 obtains the representative utterance feature parameter for the whole voice data as uttered. Of the elements of the utterance feature parameter, which have been obtained by Step S22, the element having the largest value is determined as the element of the representative utterance feature parameter. The first element of the utterance feature parameter "u" is "0.50" and the first element of the utterance feature parameter "v" is "0.80". Of these values, the largest value is "0.80". In the same way, the second element of the utterance feature parameter "u" is "0.50" and the second element of the utterance feature parameter "v" is "0.20". Of these values, the largest value is "0.50".

According such procedure, the representative utterance feature parameter "w" is expressed as follows:

w = (0.80, 0.50)

Then, of the elements of the representative utterance feature parameter "w", the element having the largest value is determined as the utterance feature category. The element having the largest value in the representative utterance feature parameter "w" is "0.80" in the first element. Accordingly, the utterance feature category selecting section 22 judges a person who gave the utterance to be the "Kansai person" and sends the judgment results to the response voice generating unit 30.

Then the response voice generating unit 30 reflects the utterance feature category and conducts a voice synthesis processing to output the synthesized voice in the form of voice response.

<Modification No. 2>

Now, another modification of the above-described example will be described below. In this modification No. 2, a plurality of utterance feature databases is prepared and the utterance feature parameter is obtained for each of the utterance feature databases, thus making it possible to reflect more detailed features of the user's utterance in the voice response.

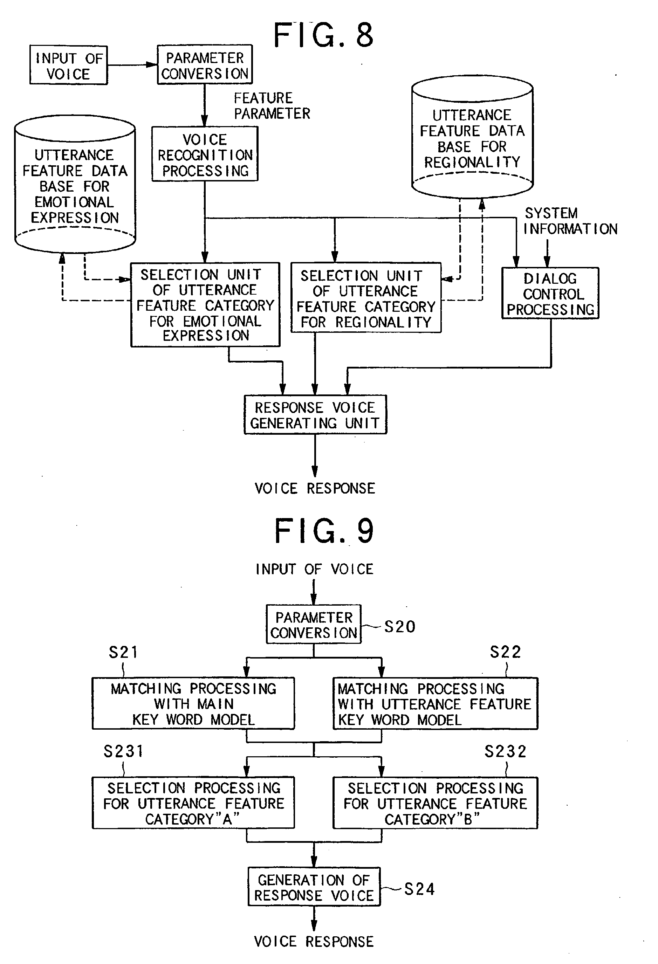

More specifically, there have been previously prepared a database of the utterance feature "A" (for example, the utterance feature database for emotional expression as shown in FIG. 8) and a database of the utterance feature "B" (for example, the utterance feature database for regionality as shown in FIG. 8) so that two utterance feature parameters, i.e., any one of the utterance feature "A" parameters and any one of the utterance feature "B" parameters are obtained for a single key word (see FIG. 8).

Previously obtaining the representative utterance feature parameters from the utterance feature "A" parameters and the utterance feature "B" parameters in all the key words makes it possible to obtain features, which have been judged from two points of view in the utterance. It is therefore possible to provide the voice response in which the mode detailed utterance conditions are reflected, in comparison with the case where the single utterance feature category parameter is utilized as described above.

It is needless to say that the similar processing may be applied to a case where three or more utterance feature databases are utilized. In this case, the voice recognition/response system comprehends the utterance conditions in more detail, thus making it possible to provide the most suitable voice response to the conditions.

Now, the respective processing will be described below in accordance with the block diagram as shown in FIG. 1 and the flowchart as shown in FIG. 9.

<Processing Example>

First, the parameter conversion section 12 converts the utterance data, which have been inputted, into the feature parameter (Step S20). Then, the voice recognition processing section 14 conducts a matching processing of the feature parameter generated in Step S20 with the main key word model to extract the key word (Step S21). The voice recognition processing section 14 also conducts the matching processing of the feature parameter generated in Step S20 with the feature key word model to extract the key word for the feature (Step S22), in the same manner as Step S21. Of course, the utterance feature category is utilized only for the main key word, as described above. In this case, the system structure is identical to that of the flowchart as shown in FIG. 9, from which Step S21 is excluded.

Then, the utterance feature category selecting section 22 utilizes the utterance feature "A" parameters, which correspond to the main key word obtained by Step S21 and the feature key word obtained by Step S22, to obtain the most suitable utterance feature "A" category (Step S231). At this stage, all of the utterance feature "A" parameters stored on the side of the main key words and the utterance feature "A" parameters stored on the side of the feature key words are utilized to obtain the representative utterance feature "A" parameter. The utterance feature category selecting section 22 also utilizes the utterance feature "B" parameters, which correspond to the main key word obtained by Step S21 and the feature key word obtained by Step S22, to obtain the most suitable utterance feature "B" category (Step S232), in the same manner as Step S231.

The response voice generating unit 30 generates voice for voice response, utilizing the utterance feature "A" category obtained by Step S231, the utterance feature "B" category obtained by Step S232 and the recognition key words obtained by Steps S21 and S22 (Step S24). The thus generated voice is inputted to the user in the form of voice response.

Now, a concrete processing example in the modification No. 2 will be described below.

<Example> : In case where utterance of "*akan, juutai-jouhou wo tanomu-wa*" (Note: This is to be spoken with the Kansai accent and means "Oh, my God! Please give me a traffic jam information") is given.

Prerequisites:

☐ The main key word is "*juutai-jouhou*" (i.e., traffic jam information).
☐ The word *"tanomu-wa"* (i.e., "please give me") has been recorded as the utterance feature key word.
☐ Utterance feature "A" parameter of the word "*juutai-jouhou*"(i.e., traffic jam information): (0.50, 0.50)
☐ Utterance feature "B" parameter of the word "*juutai-jouhou*"(i.e., traffic jam information): (0.50, 0.50)
☐ Utterance feature "A" parameter of the word "tanomu-wa" (i.e., "please give me"): (0.80, 0.20)
☐ Utterance feature "B" parameter of the word "tanomu-wa" (i.e., "please give me"): (0.50, 0.50)
☐ Utterance feature "A" parameter of the word "akan" (i.e., "Oh, my God!"): (0.80, 0.20)
☐ Utterance feature "B" parameter of the word "akan" (i.e., "Oh, my God!"): (0.10, 0.90)

\* The elements of the utterance feature "A" parameter in this example represent the following features, respectively:

(value of utterance frequency in the Kansai person, value of utterance frequency in the Kanto person) and
the elements of the utterance feature "B" parameter in this example represent the following features, respectively:

(value of frequency indicative of delightfulness, value of frequency indicative of irritancy)

The parameter conversion section 12 obtains the feature parameter of the utterance data itself in Step S20. Then, the voice recognition processing section 14 conducts a matching processing of the main key word model with the feature parameter obtained by Step S20 to extract the main key word of "juutai-jouhou"(i.e., traffic jam information) in Step S21.

The voice recognition processing section 14 also conducts the matching processing of the feature key word with the feature key word model and the feature parameter obtained by Step S20 to extract the feature key words of "*akan*" (i.e., "Oh, my God!") and "*tanomu*" (i.e., "Please give me") in Step S22.

Then, the utterance feature category selecting section 22 extracts the utterance feature "A" category in Step S231. More specifically, the utterance feature "A" parameter "ua" corresponding to the main key word of *"juutai-jouhou"* (i.e., traffic jam information) is obtained from the utterance feature database. The utterance feature "A" parameter "va(1)" corresponding to the feature key word of "tanomu" (i.e., "Please give me") and the utterance feature "A" parameter "va(2)" corresponding to the feature key word of "akan" (i.e., "Oh, my God!") are also obtained from the utterance feature database.

In this example, the utterance feature parameters "ua", "va(1)" and "va(2)" are expressed as follows:

ua = (0.50, 0.50)
va(1) = (0.80, 0.20)
va(2) = (0.90, 0.20)

In the same manner as described above, the utterance feature category selecting section 22 extracts the utterance feature "B" category in Step S232. More specifically, the utterance feature "B" parameter "ub" corresponding to the main key word of *"juutai-jouhou"*(i.e., traffic jam information) is obtained from the utterance feature database. The utterance feature "B" parameter "vb(1)" corresponding to the feature key word of "tanomu" (i.e., "Please give me") and the utterance feature "B" parameter "vb(2)" corresponding to the feature key word of "akan" (i.e., "Oh, my God!") are also obtained from the utterance feature database.

In this example, the utterance feature "B" parameters "ub", "vb(1)" and "vb(2)" are expressed as follows:

ub = (0.50, 0.50)
vb1) = (0.50, 0.50)
vb(2) = (0.10, 0.90)

Then, the utterance feature category selecting section 22 obtains the representative utterance feature parameter for the whole voice data as uttered. Of the elements of the utterance feature "A" parameter and of the elements of the utterance feature "B" parameter, which have been obtained by Steps S231 and S232, respectively, the elements having the largest values are determined as the elements of the representative utterance feature "A" parameter and the representative utterance feature "B" parameter, respectively.

Here, the representative utterance feature "A" parameter for the utterance feature "A" parameter is obtained. The first element of the utterance feature "A" parameter "ua" is "0.50", the first element of the utterance feature "A" parameter "va(1)" is "0.80" and the first element of the utterance feature "A" parameter "va(2)" is "0.90". Of these three values, the largest value is "0.90". In the same way, the second element of the utterance feature "A" parameter "ua" is "0.50", the second element of the utterance feature "A" parameter "va(1)" is "0.20" and the second element of the utterance feature "A" parameter "va(2)" is "0.20". Of these three values, the largest value is "0.50".

According such procedure, the representative utterance feature "A" parameter "wa" is expressed as follows:

wa = (0.90, 0.50)

The representative utterance feature "B" parameter "wb" for the utterance feature "B" parameter, which is obtained in the similar procedure, is expressed as follows:

wb = (0.50, 0.90)

Then, of the elements of the representative utterance feature "A" parameter "wa" and the representative utterance feature "B" parameter "wb", the respective elements having the largest value are determined as the utterance feature categories. The element having the largest value in the representative utterance feature "A" parameter "wa" is "0.90" in the first element. Accordingly, the utterance feature category selecting section 22 judges a person who gave the utterance to be the "Kansai person" and sends the judgment results to the response voice generating unit 30.

In the same manner, the element having the largest value in the representative utterance feature "B" parameter "wb" is "0.90" in the first element. Accordingly, the utterance feature category selecting section 22 judges that a person who gave the utterance feels "irritancy" and sends the judgment results to the response voice generating unit 30.

Then the response voice generating unit 30 reflects the two utterance feature categories and conducts a voice synthesis processing to output the synthesized voice in the form of voice response.

According to the present invention as described in detail, the voice recognition/response system of the present invention is configured so that the voice recognition of the user's utterance is carried out, the utterance feature category for the user's utterance is selected on the basis of the recognition results, and the response voice according to the utterance feature category is generated. As a result, a switching operation of the voice response is performed to provide an output in accordance with the user's utterance. It is therefore possible to provide a dialog with which the user feels familiarity, while avoiding the user's confusion, which may be caused by change in utterance style such as dialect, through only information obtained by the voice recognition/response system.

## Claims

1.   A voice recognition/response system comprising:

an utterance recognition unit (10) for recognizing utterance content of a user through a voice input therefrom and outputting recognition results;
a dialog control processing unit (40) for controlling progress of dialog with the user based on said recognition results so as to determine response content to said user;
an utterance feature analyzing unit (20) for analyzing utterance features of said user to generate utterance feature information; and
a response voice generating unit (30) for generating response voice to said user based on said response content and said utterance feature information, and a selected utterance feature category,

wherein
said utterance feature information includes a plurality of utterance feature categories, which are obtained by classifying the utterance features of the user into a plurality of groups; and
said utterance feature analyzing unit (20) comprises:

a database (24) for storing utterance feature parameters, which are utilized to select said utterance feature category associated with utterance of said user; and
a device (22) for selecting said utterance feature category, utilizing the utterance feature parameters corresponding to a recognition key word extracted by said utterance recognition unit (10) and outputting the selected utterance feature category;
and
said utterance feature parameters including a value, which is indicative of occurrence frequency with which a key word is used within an utterance category concerning features that are classified into various elements and the element having the largest value is determined as the element of the representative utterance feature parameter.

2.   The system as claimed in Claim 1, wherein:

said plurality of utterance feature categories include parameters concerning regionality of said user.

3. A storage medium on which a voice recognition/response program to be executed by a computer is stored, wherein said program causes said computer to function as:

an utterance recognition unit (10) for recognizing utterance content of a user through a voice input therefrom and outputting recognition results;
a dialog control processing unit (40) for controlling progress of dialog with the user based on said recognition results so as to determine response content to said user;
an utterance feature analyzing unit (20) for analyzing utterance features of said user to generate utterance feature information; and
a response voice generating unit (30) for generating response voice to said user based on said response content and said utterance feature information and a selected utterance feature category,

wherein
said utterance feature information includes a plurality of utterance feature categories, which are obtained by classifying the utterance features of the user into a plurality of groups; and
said utterance feature analyzing unit (20) comprises:

a database (24) for storing utterance feature parameters, which are utilized to select said utterance feature category associated with utterance of said user; and
a device (22) for selecting said utterance feature category, utilizing the utterance feature parameters corresponding to a recognition key word extracted by said utterance recognition unit (10), and outputting the selected utterance feature category;
and
said utterance feature parameters including a value, which is indicative of occurrence frequency with which a key word is used within an utterance category concerning features that are classified into various elements and the element having the largest value is determined as the element of the representative utterance feature parameter.

4. A voice recognition/response program product to be executed by a computer, wherein said program product causes said computer to function as:

an utterance recognition unit (10) for recognizing utterance content of a user through a voice input therefrom and outputting recognition results;
a dialog control processing unit (40) for controlling progress of dialog with the user based on said recognition results so as to determine response content to said user;
an utterance feature analyzing unit (20) for analyzing utterance features of said user to generate utterance feature information; and
a response voice generating unit (30) for generating response voice to said user based on said response content and said utterance feature information, and a selected utterance feature category,

wherein
said utterance feature information includes a plurality of utterance feature categories, which are obtained by classifying the utterance features of the user into a plurality of groups; and
said utterance feature analyzing unit (20) comprises:

a database (24) for storing utterance feature parameters, which are utilized to select said utterance feature category associated with utterance of said user; and
a device (22) for selecting said utterance feature category, utilizing the utterance feature parameters corresponding to a recognition key word extracted by said utterance recognition unit (10), and outputting the selected utterance feature category;
and
said utterance feature parameters including a value, which is indicative of occurrence frequency with which a key word is used within an utterance category concerning features that are classified into various elements and the element having the largest value is determined as the element of the representative utterance feature parameter.

**Patentansprüche**

1.  Spracherkennungs-/Antwort-System mit:

    einer Äußerungs-Erkennungseinheit (10) zur Erkennung des Äußerungs-Inhaltes eines Benutzers über einen Spracheingang von diesem und zur Ausgabe von Erkennungsergebnissen;
    einer Dialog-Steuer-Verarbeitungseinheit (40) zur Steuerung des Fortschrittes des Dialoges mit dem Benutzer auf der Grundlage der Erkennungsergebnisse, um den Antwort-Inhalt an den Benutzer zu bestimmen;
    einer Äußerungs-Merkmals-Analyse-Einheit (20) zum Analysieren von Äußerungs-Merkmalen des Benutzers zur Erzeugung von Äußerungs-Merkmals-Information; und
    einer Antwort-Spracherzeugungs-Einheit (30) zur Erzeugung einer Antwortsprache an den Benutzer auf der Grundlage des Antwort-Inhaltes und der Äußerungs-Merkmals-Information und einer ausgewählten Äußerungs-Merkmals-Kategorie,

    worin
    die Äußerungs-Merkmals-Information eine Vielzahl von Äußerungs-Merkmals-Kategorien einschließt, die durch Klassifizieren der Äußerungs-Merkmale des Benutzers in eine Vielzahl von Gruppen gewonnen werden; und
    die Äußerungs-Merkmals-Analyse-Einheit (20) Folgendes umfasst:

    eine Datenbank (24) zum Speichern von Äußerungs-Merkmals-Parametern, die zur Auswahl der Äußerungs-Merkmals-Kategorie verwendet werden, die der Äußerung des Benutzers zugeordnet ist; und
    eine Einrichtung (22) zur Auswahl der Äußerungs-Merkmals-Kategorie unter Verwendung der Äußerungs-Merkmals-Parameter entsprechend einem Erkennungs-Schlüsselwort, das von der Äußerungs-Erkennungs-Einheit (10) abgeleitet ist, und Ausgabe der ausgewählten Äußerungs-Merkmals-Kategorie;

    wobei die Äußerungs-Merkmals-Parameter einen Wert einschließen, der eine Äußerungs-Häufigkeit, mit der ein Schlüsselwort innerhalb einer Äußerungs-Kategorie verwendet wird, bezüglich von Merkmalen anzeigt, die in verschiedene Elemente klassifiziert sind und wobei das Element, das den größten Wert hat, als das Element des repräsentativen Äußerungs-Merkmals-Parameters bestimmt wird.

2.  System nach Anspruch 1, bei dem:

    die Vielzahl von Äußerungs-Merkmals-Kategorien Parameter einschließt, die die regionale Herkunft des Benutzers betreffen.

3.  Speichermedium, auf dem ein von einem Computer auszuführendes Spracherkennungs-/Antwort-Programm gespeichert ist, wobei das Programm bewirkt, dass der Computer als Folgendes funktioniert:

    eine Äußerungs-Erkennungseinheit (10) zur Erkennung des Äußerungs-Inhaltes eines Benutzers über einen Spracheingang von diesem und zur Ausgabe von Erkennungs-Ergebnissen;
    eine Dialog-Steuer-Verarbeitungseinheit (40) zur Steuerung des Fortschrittes des Dialoges mit dem Benutzer auf der Grundlage der Erkennungs-Ergebnisse, um auf diese Weise einen Antwort-Inhalt an den Benutzer zu bestimmen;
    eine Äußerungs-Merkmals-Analyse-Einheit (20) zum Analysieren von Äußerungs-Merkmalen des Benutzers zur Erzeugung einer Äußerungs-Merkmals-Information; und
    eine Antwort-Spracherzeugungs-Einheit (30) zur Erzeugung einer AntwortSprache an den Benutzer auf der Grundlage des Antwort-Inhaltes und der Äußerungs-Merkmals-Information und einer ausgewählten Äußerungs-Merkmals-Kategorie,

    worin
    die Äußerungs-Merkmals-Information eine Vielzahl von Äußerungs-Merkmals-Kategorien einschließt, die durch Klassifizieren der Äußerungs-Merkmale des Benutzers in eine Vielzahl von Gruppen gewonnen werden; und
    die Äußerungs-Merkmals-Analyse-Einheit (20) Folgendes umfasst:

    eine Datenbank (24) zum Speichern von Äußerungs-Merkmals-Parametern, die zur Auswahl der Äußerungs-Merkmals-Kategorie verwendet werden, die der Äußerung des Benutzers zugeordnet ist; und
    eine Einrichtung (22) zur Auswahl der Äußerungs-Merkmals-Kategorie unter Verwendung der Äußerungs-Merkmals-Parameter, die einem Erkennungs-Schlüsselwort entsprechen, das von der Äußerungs-Erkennungseinheit (10) abgeleitet wird, und zur Ausgabe der ausgewählten Äußerungs-Merkmals-Kategorie;

wobei die Äußerungs-Merkmals-Parameter einen Wert einschließen, der die Häufigkeit, mit der ein Schlüsselwort innerhalb einer Äußerungs-Kategorie verwendet wird, bezüglich von Merkmalen anzeigt, die in verschiedene Elemente klassifiziert sind, und wobei das Element mit dem größten Wert als das Element des repräsentativen Äußerungs-Merkmals-Parameters bestimmt wird.

**4.** Spracherkennungs-/Antwort-Programmprodukt, das von einem Computer auszuführen ist, wobei das Programmprodukt bewirkt, dass der Computer als Folgendes wirkt:

eine Äußerungs-Erkennungseinheit (10) zur Erkennung des Äußerungs-Inhaltes eines Benutzers über einen Spracheingang von diesem und zur Ausgabe von Erkennungsergebnissen;
eine Dialog-Steuer-Verarbeitungs-Einheit (40) zur Steuerung des Fortschrittes des Dialoges mit dem Benutzer auf der Grundlage der Erkennungsergebnisse, um den Antwort-Inhalt an den Benutzer zu bestimmen;
eine Äußerungs-Merkmals-Analyse-Einheit (20) zum Analysieren von Äußerungs-Merkmalen des Benutzers zur Erzeugung von Äußerungs-Merkmals-Information; und
eine Antwort-Spracherzeugungs-Einheit (30) zur Erzeugung von AntwortSprache an den Benutzer auf der Grundlage des Antwort-Inhaltes und der Äußerungs-Merkmals-Information und einer ausgewählten Äußerungs-Merkmals-Kategorie;

worin
die Äußerungs-Merkmals-Information eine Vielzahl von Äußerungs-Merkmals-Kategorien einschließt, die durch Klassifizieren der Äußerungs-Merkmale des Benutzers in eine Vielzahl von Gruppen gewonnen werden; und
die Äußerungs-Merkmals-Analyse-Einheit (20) Folgendes umfasst:

eine Datenbank (24) zum Speichern von Äußerungs-Merkmals-Parametern, die zur Auswahl der Äußerungs-Merkmals-Kategorie verwendet werden, die der Äußerung des Benutzers zugeordnet ist; und
eine Einrichtung (22) zur Auswahl der Äußerungs-Merkmals-Kategorie unter Verwendung der Äußerungs-Merkmals-Parameter, die einem Erkennungs-Schlüsselwort entsprechen, das von der Äußerungs-Erkennungs-Einheit (10) abgeleitet wird, und zur Ausgabe der ausgewählten Äußerungs-Merkmals-Kategorie;

wobei die Äußerungs-Merkmals-Parameter einen Wert einschließen, der die Häufigkeit des Auftretens, mit der ein Schlüsselwort in einer Äußerungs-Kategorie verwendet wird, bezüglich von Merkmalen anzeigt, die in verschiedene Elemente klassifiziert sind, und wobei das Element mit dem größten Wert als das Element des repräsentativen Äußerungs-Merkmals-Parameters bestimmt wird.

## Revendications

**1.** Système de reconnaissance/réponse vocale comportant :

une unité de reconnaissance de prononciation (10) pour reconnaître le contenu de prononciation d'un utilisateur par l'intermédiaire de l'entrée vocale et délivrer les résultats de reconnaissance ;
une unité de traitement de contrôle de dialogue (40) pour contrôler l'établissement du dialogue avec l'utilisateur en fonction desdits résultats de reconnaissance de manière à déterminer un contenu de réponse audit utilisateur ;
une unité d'analyse de caractéristique de prononciation (20) pour analyser les caractéristiques de prononciation dudit utilisateur pour générer une information de caractéristiques de prononciation ; et
une unité de génération de réponse vocale (30) pour générer une réponse vocale audit utilisateur en fonction dudit contenu de réponse et de ladite information de caractéristique de prononciation, et une catégorie de caractéristique de prononciation sélectionnée,
dans lequel
ladite information de caractéristique de prononciation comprend une pluralité de catégories de caractéristique de prononciation, qui sont obtenues en classifiant les caractéristiques de prononciation de l'utilisateur en une pluralité de groupes ; et
ladite unité d'analyse de caractéristique de prononciation (20) comprend :

une base de données (24) pour mémoriser les paramètres de caractéristique de prononciation, qui sont utilisés pour sélectionner ladite catégorie de caractéristique de prononciation associée à la prononciation dudit utilisateur ; et

un dispositif (22) pour sélectionner ladite catégorie de caractéristique de prononciation, en utilisant les paramètres de caractéristique de prononciation correspondant à un mot-clé de reconnaissance extrait par ladite unité de reconnaissance de prononciation (10), et délivrer la catégorie de caractéristique de prononciation sélectionnée ; et

lesdits paramètres de caractéristique de prononciation comprenant une valeur, qui indique la fréquence d'apparition grâce à laquelle un mot-clé est utilisé dans une catégorie de prononciation concernant les caractéristiques qui sont classifiées en différents éléments et l'élément possédant la plus grande valeur est déterminé en tant qu'élément de paramètre de caractéristique de prononciation représentatif.

2. Système selon la revendication 1, dans lequel :

ladite pluralité de catégories de caractéristique de prononciation comprend des paramètres concernant la région dudit utilisateur.

3. Moyen de stockage dans lequel un programme de reconnaissance/réponse vocale à exécuter par un ordinateur est mémorisé, dans lequel ledit programme amène ledit ordinateur à fonctionner comme :

une unité de reconnaissance de prononciation (10) pour reconnaître le contenu de prononciation d'un utilisateur par l'intermédiaire d'une entrée vocale et délivrer les résultats de reconnaissance ;
une unité de traitement de contrôle de dialogue (40) pour contrôler l'établissement du dialogue avec l'utilisateur en fonction desdits résultats de reconnaissance de manière à déterminer le contenu de réponse audit utilisateur ;
une unité d'analyse de caractéristique de prononciation (20) pour analyser les caractéristiques de prononciation dudit utilisateur pour générer une information de caractéristique de reconnaissance ; et
une unité de génération de réponse vocale (30) pour générer une réponse vocale audit utilisateur en fonction dudit contenu de réponse et de ladite information de caractéristique de prononciation, et une catégorie de caractéristique de prononciation sélectionnée,
dans lequel
ladite information de caractéristique de prononciation comprend une pluralité de catégories de caractéristique de prononciation, qui sont obtenues en classifiant les caractéristiques de prononciation de l'utilisateur en une pluralité de groupes ; et
ladite unité d'analyse de caractéristique de prononciation (20) comprend :

une base de données (24) pour mémoriser les paramètres de caractéristique de prononciation, qui sont utilisés pour sélectionner ladite catégorie de caractéristique de prononciation associée à la prononciation dudit utilisateur ; et
un dispositif (22) pour sélectionner ladite catégorie de caractéristique de prononciation, utilisant les paramètres de caractéristique de prononciation correspondant à un mot-clé de reconnaissance extrait par ladite unité de reconnaissance de prononciation (10), et délivrer la catégorie de caractéristique de prononciation sélectionnée ; et
lesdits paramètres de caractéristique de prononciation comprenant une valeur, qui indique la fréquence d'apparition avec laquelle un mot-clé est utilisé à l'intérieur d'une catégorie de prononciation concernant les caractéristiques qui sont classifiées en différents éléments et l'élément possédant la plus grande valeur est déterminé comme élément du paramètre de caractéristique de prononciation représentatif.

4. Produit programme de reconnaissance/réponse vocale à exécuter par un ordinateur, dans lequel ledit produit programme amène ledit ordinateur à fonctionner comme:

une unité de reconnaissance de prononciation (10) pour reconnaître un contenu de prononciation d'un utilisateur par l'intermédiaire d'une entrée vocale et délivrer les résultats de reconnaissance ;
une unité de traitement de contrôle de dialogue (40) pour contrôler l'établissement du dialogue avec l'utilisateur en fonction desdits résultats de reconnaissance de manière à déterminer un contenu de réponse audit utilisateur ;
une unité d'analyse de caractéristique de prononciation (20) pour analyser les caractéristiques de prononciation dudit utilisateur pour générer une information de caractéristique de prononciation ; et
une unité de génération de réponse vocale (30) pour générer une réponse vocale audit utilisateur en fonction dudit contenu de réponse et de ladite information de caractéristique de prononciation, et une catégorie de caractéristique de prononciation sélectionnée,
dans lequel

ladite information de caractéristique de prononciation comprend une pluralité de catégories de caractéristique de prononciation, qui sont obtenues en classifiant les caractéristiques de prononciation de l'utilisateur en une pluralité de groupes ; et

ladite unité d'analyse de caractéristique de prononciation (20) comprend :

une base de données (24) pour mémoriser les paramètres de caractéristique de prononciation, qui sont utilisés pour sélectionner ladite catégorie de caractéristique de prononciation associée à la prononciation dudit utilisateur ; et

un dispositif (22) pour sélectionner ladite catégorie de caractéristique de prononciation, utilisant les paramètres de caractéristique de prononciation correspondant à un mot-clé de reconnaissance extrait par ladite unité de reconnaissance de prononciation (10), et délivrer la catégorie de caractéristique de prononciation sélectionnée ; et

lesdits paramètres de caractéristique de prononciation comprenant une valeur, qui indique la fréquence d'apparition avec laquelle un mot-clé est utilisé à l'intérieur d'une catégorie de prononciation concernant les caractéristiques qui sont classifiées en différents éléments et l'élément possédant la plus grande valeur est déterminé en tant qu'élément du paramètre de caractéristique de prononciation représentatif.

# FIG. 1

<u>1</u>

INPUT OF VOICE

UTTERANCE
RECOGNITION — 10
UNIT

S1 : RECOGNITION
KEY WORD

SYSTEM
INFORMATION

20 — UTTERANCE
FEATURE
ANALYZING UNIT

DIALOG CONTROL
PROCESSING UNIT

S2 : UTTERANCE
FEATURE
INFORMATION

40

30 — RESPONSE VOICE
GENERATING UNIT

S3 : RESPONSE
VOICE
INFORMATION

VOICE RESPONSE

# FIG. 2

<u>100</u>

INPUT OF
VOICE

FEATURE
PARAMETER

10

PARAMETER
CONVERSION ⌇12

VOICE
RECOGNITION ⌇14
PROCESSING

SYSTEM
INFORMATION

RECOGNITION
KEY WORD

20

UTTERANCE
FEATURE
DATA BASE

UTTERANCE FEATURE
CATEGORY SELECTING
SECTION

DIALOG
CONTROL
PROCESSING

40

24

UTTERANCE
FEATURE
CATEGORY

22

REFERENCE ID

RESPONSE VOICE
GENERATING UNIT ⌇30

VOICE RESPONSE

21

# FIG. 3

```
    ┌─────────────────────────┐
    │  UTTERANCE  FEATURE     │
    │ CATEGORY  SELECTION     │
    │     PROCESSING          │
    └─────────────────────────┘
                │
                ▼
    ┌─────────────────────────┐
    │  OBTAIN  RECOGNITION    │ ─── S10
    │     KEY  WORD           │
    └─────────────────────────┘
                │
                ▼
    ┌─────────────────────────┐
    │   OBTAIN  UTTERANCE     │ ─── S11
    │  FEATURE  PARAMETER     │
    └─────────────────────────┘
                │
                ▼
    ┌─────────────────────────┐
    │ GENERATE REPRESENTATIVE │
    │  UTTERANCE  FEATURE     │ ─── S12
    │      PARAMETER          │
    └─────────────────────────┘
                │
                ▼
    ┌─────────────────────────┐
    │   SELECT  UTTERANCE     │ ─── S13
    │  FEATURE  CATEGORY      │
    └─────────────────────────┘
                │
                ▼
    ┌─────────────────────────┐
    │   OUTPUT  UTTERANCE     │ ─── S14
    │  FEATURE  CATEGORY      │
    └─────────────────────────┘
                │
                ▼
    ┌─────────────────────────┐
    │          END            │
    └─────────────────────────┘
```

# FIG. 4

RESPONSE VOICE GENERATION PROCESSING

S30 OBTAIN UTTERANCE FEATURE CATEGORY

S31 SELECT RESPONSE DATA BASE

UTTERANCE FEATURE CATEGORY

S32 OBTAIN READING INFORMATION AND PROSODY INFORMATION

SELECTED RESPONSE DATA BASE

S33 VOICE SYNTHESIS PROCESSING

S34 OUTPUT VOICE RESPONSE

END

32:DATA BASE CONSTELLATION

33

RESPONSE DATA BASE OF UTTERANCE FEATURE CATEGORY No.1

READING INFOR-MATION  PROSODY INFOR-MATION

33a  33b

34

RESPONSE DATA BASE OF UTTERANCE FEATURE CATEGORY No.2

READING INFOR-MATION  PROSODY INFOR-MATION

34a  34b

. . .

REFERENCE ID FOR RESPONSE VOICE DATA BASE (FROM DIALOG CONTROL PROCESSING UNIT 40)

PHONEME DATA BASE

38

# FIG. 5

RESPONSE VOICE
GENERATION
PROCESSING

↓

S40 — OBTAIN UTTERANCE
FEATURE CATEGORY

↓

S41 — SELECT VOICE
RESPONSE
DATA BASE

UTTERANCE
FEATURE
CATEGORY

50

RESPONSE
VOICE DATA
BASE

RECOGNITION
KEY WORD

↓

S42 — OBTAIN
RESPONSE
VOICE

REALIZE DIALOG
CONDITION

DIALOG
CONDITION
DATA

S43

↓

S44 — OUTPUT VOICE
RESPONSE

↓

END

EP 1 387 349 B1

# FIG. 6A

<READING DATA BASE CONTENT EXAMPLE No.1>

| REFERENCE ID | READING DATA BASE ACCORDING TO KANSAI ACCENT IN JAPANESE LANGUAGE | READING DATA BASE ACCORDING TO KANTO ACCENT IN JAPANESE LANGUAGE |
|---|---|---|
| 1 | "ittchan chikai mo-ta pu-ru ha,konomichi wo ichi-kiro kurai itta tokoro ni arude" (Note:This sentence in Japanese language, which is to be spoken with a Kansai accent, means"Go along the street about a kilometer until you get to the nearest parking area.") | "ichiban chikai chu-sha-jou ha, konomichi wo ichi-kiro kurai itta tokoro ni arimasu" (Note: This sentence in Japanese language, which is to be spoken with a Kanto accent, means,"Go along the street about a kilometer until you get to the nearest parking area.") |
| 2 | "hona,"makudo"ni ikimashou!" (Note: This sentence in Japanese language, which is to be spoken with the Kansai accent, means"All right, lets go to Mackers!") | "dewa,"makudonarudo" ni ikimashou!" (Note: This sentence in Japanese language, which is to be spoken with the Kanto accent, means,"All right,lets go to MacDonald's!") |
| · · · | · · · | · · · |

# FIG. 6B

<READING DATA BASE CONTENT EXAMPLE No.2>

| REFERENCE ID | DELIGHTFULNESS | IRRITANCY |
|---|---|---|
| · · · | · · · | · · · |
| · · · | · · · | · · · |
| 3 | GOOD THING.YOU LOOK DELIGHTED. | ACTUALLY, YOU DO NOT LOOK DELIGHTED, DON'T YOU. |
| · · · | · · · | · · · |
| · · · | · · · | · · · |

EP 1 387 349 B1

# FIG. 7

INPUT OF VOICE

↓

PARAMETER
CONVERSION — S20

S21

MATCHING PROCESSING
WITH MAIN KEY
WORD MODEL

S22

MATCHING PROCESSING
WITH UTTERANCE FEATURE
KEY WORD MODEL

↓

SELECTION PROCESSING
OF UTTERANCE
FEATURE CATEGORY — S23

↓

GENERATION OF
RESPONSE VOICE — S24

↓

VOICE RESPONSE

# FIG. 8

```
┌──────────┐      ┌──────────┐
│ INPUT OF │─────▶│ PARAMETER │
│  VOICE   │      │CONVERSION │
└──────────┘      └──────────┘
                       │ FEATURE
                       │ PARAMETER
                       ▼
                  ┌──────────┐
                  │  VOICE   │
                  │RECOGNITION│
                  │PROCESSING │
                  └──────────┘
```

UTTERANCE FEATURE DATA BASE FOR EMOTIONAL EXPRESSION

UTTERANCE FEATURE DATA BASE FOR REGIONALITY

SYSTEM INFORMATION

SELECTION UNIT OF UTTERANCE FEATURE CATEGORY FOR EMOTIONAL EXPRESSION

SELECTION UNIT OF UTTERANCE FEATURE CATEGORY FOR REGIONALITY

DIALOG CONTROL PROCESSING

RESPONSE VOICE GENERATING UNIT

VOICE RESPONSE

# FIG. 9

INPUT OF VOICE

PARAMETER CONVERSION — S20

S21 — MATCHING PROCESSING WITH MAIN KEY WORD MODEL

S22 — MATCHING PROCESSING WITH UTTERANCE FEATURE KEY WORD MODEL

S231 — SELECTION PROCESSING FOR UTTERANCE FEATURE CATEGORY"A"

S232 — SELECTION PROCESSING FOR UTTERANCE FEATURE CATEGORY"B"

GENERATION OF RESPONSE VOICE — S24

VOICE RESPONSE